# EUROPÄISCHE PATENTSCHRIFT

(11) **EP 1 508 399 B1**
(45) Veröffentlichungstag und Bekanntmachung des Hinweises auf die Patenterteilung: **27.12.2006**
(21) Anmeldenummer: 03019095.3
(22) Anmeldetag: 22.08.2003
(51) Int. Cl.: B23P 6/00, F01D 5/18

(54) **Schaufel einer Strömungsmaschine und Verfahren zur Verhinderung der Rissausbreitung in der Schaufel einer Strömungsmaschine**
Blade for a turbine engine and method to prevent the crack propagation in a blade for a turbine engine
Aube de turbomachine et procédé pour empêcher la propagation des fissures dans une aube de turbomachine

(43) Veröffentlichungstag der Anmeldung: 23.02.2005
(73) Patentinhaber: SIEMENS AKTIENGESELLSCHAFT, 80333 München (DE)
(72) Erfinder: Ahmad, Fathi, 41564 Kaarst (DE)

(56) Entgegenhaltungen:
- EP-A- 0 726 384
- WO-A-97/21516
- US-B1- 6 503 574
- PATENT ABSTRACTS OF JAPAN vol. 009, no. 067 (M-366), 27. März 1985 (1985-03-27) -& JP 59 200001 A (TOSHIBA KK), 13. November 1984 (1984-11-13)
- PATENT ABSTRACTS OF JAPAN vol. 2000, no. 06, 22. September 2000 (2000-09-22) -& JP 2000 087702 A (SENSHIN ZAIRYO RIYO GAS GENERATOR KENKYUSHO:KK), 28. März 2000 (2000-03-28)
- PATENT ABSTRACTS OF JAPAN vol. 1998, no. 08, 30. Juni 1998 (1998-06-30) -& JP 10 061406 A (MITSUBISHI HEAVY IND LTD), 3. März 1998 (1998-03-03)
- PATENT ABSTRACTS OF JAPAN vol. 2000, no. 04, 31. August 2000 (2000-08-31) -& JP 2000 018001 A (MITSUBISHI HEAVY IND LTD), 18. Januar 2000 (2000-01-18)
- PATENT ABSTRACTS OF JAPAN vol. 1999, no. 02, 26. Februar 1999 (1999-02-26) -& JP 10 299408 A (HITACHI LTD), 10. November 1998 (1998-11-10)

## Beschreibung

Die Erfindung betrifft eine entlang einer Schaufelachse gerichtete Schaufel einer Strömungsmaschine gemäß dem Oberbegriff des Anspruchs 1. Die Erfindung betrifft auch ein Verfahren zur Verhinderung der Ausbreitung von Rissen im Schaufelblatt der Schaufel einer

Strömungsmaschine gemäß dem Oberbegriff des Anspruchs 14.

Eine solche Schaufel und ein solches Verfahren sind aus JP-59 200001 A bekannt.

In Strömungsmaschinen wird in einem Strömungskanal ein Strömungsmedium transportiert oder aus einem strömenden Strömungsmedium Energie gewonnen. Hierzu sind im Strömungskanal Schaufeln angeordnet. Zum Beispiel sind im Strömungskanal einer axialen Gasturbine in Strömungsrichtung aufeinanderfolgend abwechselnd aus Leitschaufeln gebildete Leitschaufelkränze und aus Laufschaufeln gebildete Laufschaufelkränze angeordnet. Die Leitschaufeln lenken in geeigneter Weise das Strömungsmedium auf die Laufschaufeln, die mit einem Rotor verbunden sind und in Rotation versetzt werden, so dass kinetische Energie des Strömungsmediums in Rotationsenergie umgewandelt wird.

Solche Schaufeln in Strömungsmaschinen sind häufig erheblichen mechanischen Belastungen ausgesetzt. Gerade bei gleichzeitig hoher Temperatur und hoher Drehzahl, wie in einer Gasturbine oder eine Dampfturbine, kommt es zu einer hohen Materialbeanspruchung des Schaufelmaterials. Hierdurch können sich im Schaufelmaterial Risse bilden, die sich im Laufe der Zeit bei fortgesetzter Beanspruchung ausbreiten. Schließlich kann es zu einem Versagen der Schaufel kommen, wobei die Schaufel zerbricht oder Bruchstücke herausgelöst werden. Für in Strömungsrichtung nachfolgende Schaufeln kann dies zu erheblichen Beschädigungen führen. Eine Rissbildung und Rissausbreitung ist somit zu überwachen. Je nach Geschwindigkeit der Prozesse kann es hierdurch zu einer signifikanten Reduzierung der Verfügbarkeit der Strömungsmaschine kommen, da regelmäßige Serviceintervalle zu Ausfallzeiten der Strömungsmaschine führen.

In der US-PS 6,490,791 ist ein Verfahren beschrieben, bei dem in einem Serviceprozess Risse in der Hinterkante einer Turbinenschaufel durch ein Zurückschneiden der Hinterkante beseitigt werden. Durch ein anschließendes Verrunden des Schaufelprofils werden die durch die verkürzte Hinterkante hervorgerufenen zusätzlichen aerodynamischen Verluste gering gehalten. Dieses Verfahren kann zwar ein vollständiges Austauschen von gebrauchten gegen neue Schaufeln vermeiden, verringert aber nicht die Häufigkeit von Serviceintervallen.

In der JP 2000018001 ist eine Gasturbinenlaufschaufel gezeigt, bei der Entlastungsschlitze in Richtung der Schaufelachse zum Rand des Kopfbereiches eingebracht sind. Diese Entlastungsschlitze dienen zur Reduktion thermischer Spannungen in diesem Bereich. Durch die Reduktion thermischer Spannungen soll eine Rissbildung verringert werden. Die Entlastungsschlitze sind auf den Kopfbereich beschränkt.

Die JP 10299408 zeigt eine Gasturbinenschaufel, bei der in Bereichen hoher thermischer Spannungen elliptische Bohrungen eingebracht sind, die eine Rissausbreitung verringern sollen. Die Bohrungen sind im Übergangsbereich von Schaufelblatt und Plattform angeordnet, wobei im Schaufelblattbereich die Ellipsenhauptachse senkrecht zur Schaufelachse gerichtet ist. Eine entsprechende Ausrichtung der Bohrungen findet sich an der Hinterkante. Rissausbreitungen im Bereich der Schaufelvorderkante und insbesondere Rissausbreitungen in axialer Richtung wird hierdurch nicht entgegengewirkt.

Aus der JP 59 200001A ist eine Turbinenschaufel mit einem Grundkörper umfassend einen Fußbereich, einen Kopfbereich und ein Schaufelblatt bekannt. Am Schaufelblatt erstreckt sich entlang einer Profilsehne von einer Schaufelvorderkante zu einer Schaufelhinterkante. Etwa parallel zur Schaufelvorderkante und im Abstand von weniger als 50% der Profilsehnenlänge von der Schaufelvorderkante sind mehrere Kühlluftschlitze zueinander beabstandet.

Außerdem ist aus der EP0726 384 A1 eine Dampfturbinenschaufel mit einer im Bereich der Hinterkante angeordneten Nut bekannt, die teilweise durch eine poröse Abdeckung verschlossen ist, um als Erosionsschutzmaßnahme die Dampfturbinenschaufeln vor Tropfenerosion zu schützen.

Ferner ist aus der JP 2000 087702 ist eine faserverstärkte keramische hohle Turbinenschaufel bekannt, welche einen im Schaufelgrund eingesetzten Riegel aufweist, der mit Mikroporen versehen die Prallkühlung an der Innenseite der Schaufelwand ermöglicht. Im Bereich der Druckseite ist ein Schlitz im Schaufelgrundkörper vorgesehen, der die durch die Hitze auftretenden thermischen Dehnungen der Schaufel kompensiert und somit Rissentstehungen durch den beweglichen Schaufelgrundkörper verhindert.

Aufgabe der Erfindung ist die Angabe einer Schaufel einer Strömungsmaschine, bei der eine Rissausbreitung senkrecht zur Schaufelachse, d.h. entlang der Strömungsrichtung effektiv entgegengewirkt wird, wobei gleichzeitig geringe zusätzliche Fertigungskosten entstehen. Weitere Aufgabe der Erfindung ist die Angabe eines Verfahrens zur Verhinderung einer Rissausbreitung im Schaufelblatt einer Schaufel für eine Strömungsmaschine entlang der Richtung des Strömungsmediums.

Erfindungsgemäß wird die auf eine Schaufel einer Strömungsmaschine gerichtete Aufgabe gelöst durch eine entlang einer Schaufelachse gerichtete und aus einem Grundkörper gebildete Schaufel einer Strömungsmaschine, umfassend einen Fußbereich, einen Kopfbereich und ein Schaufelblatt mit einer vom Fußbereich zum Kopfbereich reichenden Blatthöhe und mit einer Schaufelvorderkante und einer Schaufelhinterkante, die voneinander entlang einer Profilsehne beabstandet sind, wobei etwa parallel zur Schaufelvorderkante und weniger als 50% der Profilsehnenlänge von der Schaufelvorderkante beabstandet ein Schlitz durch den Grundkörper hindurch ausgebildet ist, der mit einem Füllmaterial gefüllt ist..

Ein Schlitz ist vor seiner Verschließung hier als eine längliche Öffnung aufzufassen, bei der die Längsausdehnung mindestens fünfmal größer ist als die Querausdehnung. Die Erfindung geht von der Erkenntnis aus, dass trotz der erheblichen mechanischen Beanspruchung im Schaufelblatt es möglich ist, einen Schlitz quer zur Strömungsrichtung ins Schaufelblatt einzubringen, ohne dabei die mechanische Festigkeit der Schaufel unzulässig herabzusetzen. Gegenüber etwa einer Vielzahl von Bohrungen weist der Schlitz nach Erkenntnis der Erfindung darüber hinaus den Vorteil auf, wenig Randzonen zu haben, die häufig gerade Quellen für eine Rissentstehung sein können. Durch den Schlitz wird erstmalig über einen signifikanten Bereich hinweg eine Rissausbreitung in axialer, d.h. in Strömungsrichtung begrenzt. Gerade von der mechanisch besonders hoch beanspruchten Schaufelvorderkante gehen nämlich Risse aus, deren Ausbreitung zum Versagen der Schaufel führen können. Zudem ist eine Reparatur von Rissen im Schaufelvorderkantenbereich kaum möglich.

Der Schlitz zur Begrenzung der Rissausbreitung ist somit nicht offen, sondern mit einem Füllmaterial gefüllt. Die Funktion der Rissausbreitungsbegrenzung wird gleichwohl erfüllt, da an den Schlitzflächen im Übergangsbereich zum Füllmaterial Korngrenzen quer zur Rissausbreitungsrichtung verlaufen, die eine effektive Begrenzung der Rissausbreitung bewirken.

Vorzugsweise ist der Schlitz weniger als 25% der Profilsehnenlänge von der Schaufelvorderkante beabstandet, weiter bevorzugt weniger als 15% und weiter bevorzugt weniger als 10%. Durch die noch weiter in Richtung der Schaufelvorderkante verlagerte Position des Schlitzes kann eine weitere Begrenzung von Risslängen erreicht werden, die an der Schaufelvorderkante entstehen.

Bevorzugtermaßen ist der Schlitz in Richtung der Schaufelachse mittig im Schaufelblatt angeordnet. Gerade der mittlere Bereich des Schaufelblattes kann Ausgangspunkt von Rissen von der Schaufelvorderkante sein.

Vorzugsweise ist die Schaufel eine Gasturbinenschaufel. In einer Gasturbine kommt es zu einer besonders hohen Beanspruchung der Schaufel. Neben einer hohen Strömungsgeschwindigkeit des Gasmediums im Heißgaskanal der Gasturbine treten auch besonders hohe Temperaturen auf, die die Festigkeit der Schaufelmaterialien herabsetzen. Bei Laufschaufeln treten außerdem hohe Fliehkräfte auf. Weiterhin kommt es in einer Gasturbine durch das heiße Rauchgas auch zu einer besonders hohen Korrosion und Oxidation, welche zusätzlich das Schaufelmaterial schwächt und an den geschwächten Stellen Ausgangspunkte für Rissbildungen liefert.

Die Gasturbinenschaufel ist vorzugsweise eine Laufschaufel. Wie ausgeführt, sind die mechanischen Beanspruchungen bei Laufschaufeln aufgrund der zusätzlich auftretenden hohen Fliehkräfte besonders hoch.

Bevorzugtermaßen ist die Gasturbinenschaufel eine Leitschaufel. Gerade die erste Reihe von Schaufeln in einer Gasturbine ist eine Leitschaufelreihe und thermisch am höchsten beansprucht, da hier das in der Brennkammer erzeugte Heißgas mit maximaler Temperatur in den Heißgaskanal eintritt. Hieraus folgt eine besonders hohe thermische Belastung dieser Leitschaufeln.

Vorzugsweise ist der Grundkörper der Gasturbinenschaufel aus einer Nickel- oder Kobaltbasis-Superlegierung gebildet. Solche Superlegierungen werden aufgrund ihrer Hochwarmfestigkeit bevorzugt eingesetzt. Dies sind allerdings besonders teure Werkstoffe, die demnach möglichst lange Einsatzzeiten erhalten sollen. Eine Begrenzung der Rissausbreitung ist somit für diese Werkstoffe besonders vorteilhaft.

Weiter bevorzugt ist der Grundkörper gerichtet erstarrt oder einkristallin. Eine solche gerichtete Erstarrung oder einkristalline Struktur führt zu besonders hohen Festigkeiten. Eine Rissverbreitung kann aufgrund der stark verringerten Korngrenzen im Material allerdings leichter erfolgen als in konventionellen Schaufeln. Dementsprechend ist gerade hier eine Begrenzung der Rissausbreitung wichtig.

Vorzugsweise ist auf dem Grundkörper der Schaufel eine Beschichtung aufgebracht, die auch den mit dem Füllmaterial gefüllten Schlitz überdeckt. Gerade bei Gasturbinenschaufeln sind Beschichtungen auf dem Grundkörper weit verbreitet. Ein häufig verwendetes Schichtsystem weist eine Oxidations- und Korrosionsschutzschicht der Art MCrAlY auf, wobei M für

Eisen, Kobalt oder Nickel steht, Cr Chrom, Al Aluminium ist und Y für Yttrium oder eine andere Seltene Erde steht. Auf eine solche Korrosionsschutzschicht kann eine keramische Wärmedämmschicht aufgebracht sein, die in der Regel aus yttrium-stabilisiertem Zirkondioxid besteht. Durch das Füllmaterial im Schlitz kann die Beschichtung trotz des Schlitzes auf der gesamten Schaufelblattoberfläche aufgebracht werden.

Bevorzugt ist das Füllmaterial ein Lot. Ein geeignetes Lot kann bei vergleichsweise niedrigen Temperaturen in den Schlitz eingebracht werden, so dass durch diesen Vorgang keine Beeinträchtigung des Grundmaterials zu befürchten ist.

Das Schaufelblatt weist eine Saugseite und eine Druckseite auf. Vorzugsweise ist der Schlitz in der Saugseite eingebracht, wobei sich ein entsprechender zweiter Schlitz gegenüber auf der Druckseite befindet und wobei zwei aneinander gegenüberliegende Enden der Schlitze durch einen etwa senkrecht die Schaufelvorderkante durchschneidenden Verbindungsschlitz miteinander verbunden sind. Durch diese Ausgestaltung wird erreicht, dass sich bei einem starken Risswachstum in der Schaufelvorderkante ein durch Bruch möglicherweise entstehender Schaden lediglich auf einen kleinen Teil der Schaufel beschränkt, da nunmehr ein sich zu beiden Schlitzen erstreckender, durch die gesamte Schaufelvorderkante quer verlaufender Riss nur zu einem Ablösen eines kleinen Teils des Schaufelblattes führt. Der Verbindungsschlitz ist dabei immer eine der Kanten des sich ablösenden Bruchstückes. Hierdurch wird sichergestellt, dass selbst im Versagensfalle nachfolgende Schaufelreihen nicht durch große Bruchstücke schwer geschädigt werden.

Die auf ein Verfahren gerichtete Aufgabe wird erfindungsgemäß gelöst durch ein Verfahren zur Verhinderung einer Rissausbreitung im Schaufelblatt einer Schaufel einer Strömungsmaschine, die entlang einer Schaufelachse gerichtet und aus einem Grundkörper gebildet ist, wobei das Schaufelblatt eine Schaufelvorderkante und eine Schaufelhinterkante aufweist, wobei etwa parallel zur Schaufelvorderkante und weniger als 50% der Profilsehnenlänge von der Schaufelvorderkante beabstandet ein Schlitz durch den Grundkörper hindurch eingebracht wird, welcher durch ein Füllmaterial wieder gefüllt wird.

Die Vorteile dieses Verfahrens entsprechen den obigen Ausführungen zu den Vorteilen der Schaufel für eine Strömungsmaschine.

Der Schlitz kann z.B. durch einen Laserstrahl oder durch Einerodieren gebildet sein. Die Erfindung wird beispielhaft anhand der Zeichnungen näher erläutert. Es zeigen teilweise schematisch und nicht maßstäblich:
Figur 1 eine Gasturbine,
Figur 2 eine Gasturbinenleitschaufel und
Figur 3 einen Ausschnitt einer Schaufelvorderkante einer Gasturbinenlaufschaufel.

Gleiche Bezugszeichen haben in den verschiedenen Figuren die gleiche Bedeutung.

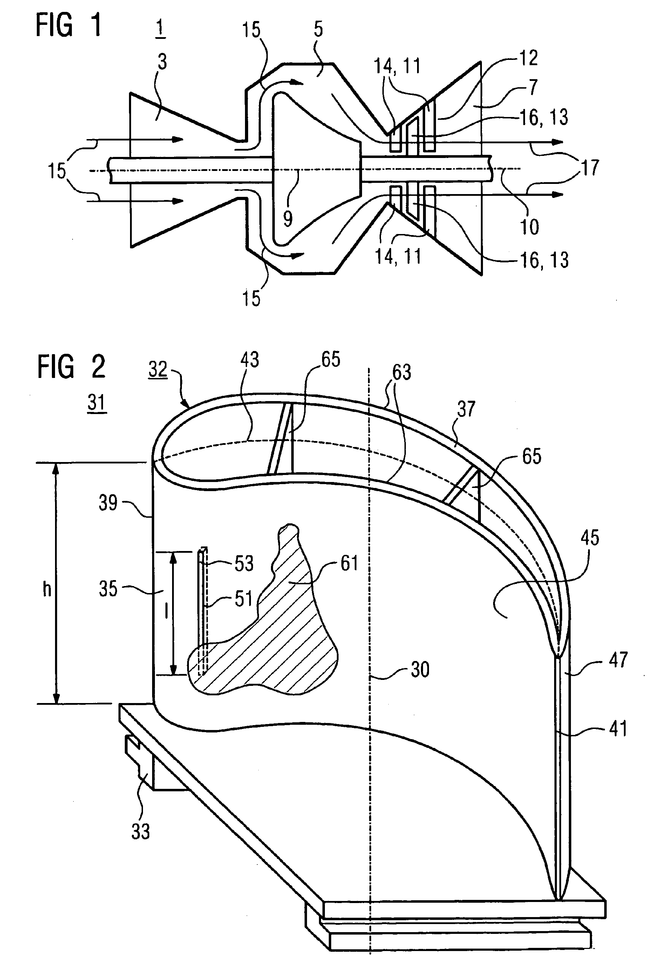

Figur 1 zeigt eine Gasturbine 1. Die Gasturbine 1 ist entlang einer Turbinenachse 10 gerichtet und weist entlang der Turbinenachse 10 aufeinanderfolgend einen Verdichter 3, eine Brennkammer 5 und ein Turbinenteil 7 auf. Der Verdichter 3 und das Turbinenteil 7 sind auf einer gemeinsamen Turbinenwelle 9 angeordnet. Im Turbinenteil 7 ist ein Heißgaskanal 12 gebildet, in den Leitschaufeln 11 und Laufschaufeln 13, die auf der Turbinenwelle 9 angeordnet sind, hinein ragen.

Im Betrieb der Gasturbine 1 wird vom Verdichter 3 Umgebungsluft angesaugt und zu Verdichterluft 15 komprimiert. Die Verdichterluft 15 wird mit Brennstoff in der Brennkammer 5 zu Heißgas 17 verbrannt, welches durch den Heißgaskanal 12 strömt. Dabei versetzt es über die Wirkung auf die Laufschaufeln 13 die Turbinenwelle 9 in Bewegung. Die Rotationsenergie der Turbinenwelle 9 kann z.B. zur Erzeugung elektrischer Energie genutzt werden.

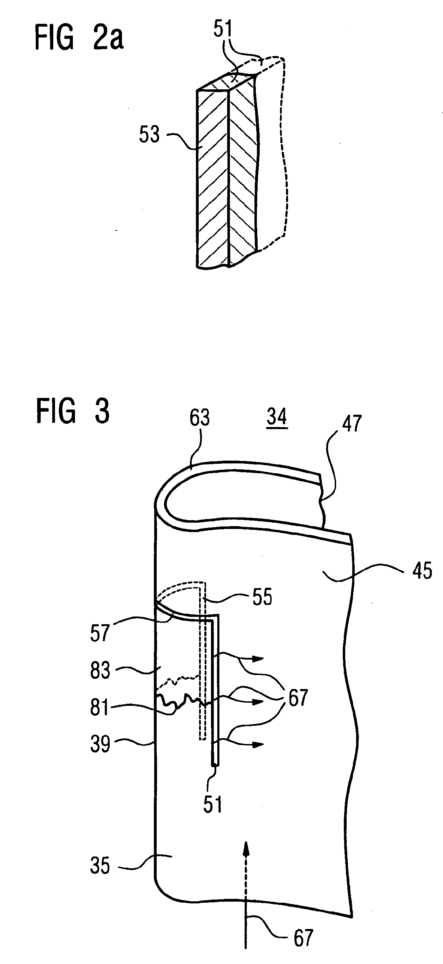

Figur 2 zeigt eine Ansicht einer Gasturbinenleitschaufel 31. Die Gasturbinenleitschaufel 31 ist entlang einer Schaufelachse 30 gerichtet. Sie ist aus einem Grundkörper 32 gebildet. Entlang der Schaufelachse 30 folgt auf einen Fußbereich 33 ein Schaufelblatt 35 und ein Kopfbereich 37. Im Kopfbereich 37 könnte statt eines offenen Endes auch eine Plattform gebildet sein. Das Schaufelblatt 35 weist eine Schaufelvorderkante 39 und eine Schaufelhinterkante 41 auf. Es hat eine Blatthöhe h. Eine Profilsehne 43 erstreckt sich von der Schaufelvorderkante 39 zur Schaufelhinterkante 41. Das Schaufelblatt 35 weist weiterhin eine Druckseite 45 und eine Saugseite 47 auf. Die Gasturbinenleitschaufel 31 ist hohl ausgeführt, indem der Grundkörper 32 eine Schaufelaußenwand 63 bildet, der den Hohlraum umschließt. Im Hohlraum sind stabilisierende Rippen 65 angeordnet. Auf dem Schaufelblatt 35 ist auf dem Grundkörper 32 eine Beschichtung 61 aufgebracht, die z.B. die oben erwähnte Korrosions- und Oxidationsschutzschicht des Typs MCrAlY sein kann.

Bei einer axialen Position von weniger als 10% der Länge der Profilsehne 43 ist in der Druckseite 45 ein Schlitz 51 angeordnet. Der Schlitz 51 erstreckt sich parallel zur Schaufelachse 30. Er ist etwa mittig im Schaufelblatt 35 angeordnet. Seine Länge *l* ist größer als 30% der Blatthöhe *h*. Im Schlitz 51 ist ein Füllmaterial 53 angeordnet. Das Füllmaterial 53 kann den Schlitz 51 vollständig ausfüllen oder auch nur im Bereich der Oberfläche des Schaufelblattes 35 vorhanden sein.

Figur 2a zeigt vergrößert dargestellt das im Schlitz 51 angeordnete Füllmaterial 53. Durch das Füllmaterial 53 ist es insbesondere möglich, die Beschichtung 61 problemlos auch im Bereich des Schlitzes 51 auf die Oberfläche des Schaufelblattes 35 aufzubringen.

Durch den Schlitz 51 wird die Ausbreitung von Rissen begrenzt, die sich von der Schaufelvorderkante 39 etwa in axialer, d.h. in Richtung des Strömungsmediums, ausbreiten. Die Lebensdauer der Schaufel wird erhöht, wodurch längere Betriebszeiten möglich und weniger Serviceintervalle nötig sind. Gerade die Begrenzung der Rissausbreitung im Bereich der Schaufelvorderkante ist aufgrund der hohen mechanischen Beanspruchung des Schaufelvorderkantenbereiches und der schwierigen Reparaturen von Rissen in diesem Bereich besonders vorteilhaft.

Figur 3 zeigt einen Ausschnitt des Bereiches um eine Schaufelvorderkante 39 einer Gasturbinenlaufschaufel 34. In der Druckseite 45 des Schaufelblattes 35 ist ein offener Schlitz 51 parallel zur Schaufelachse 30 eingebracht. In entsprechendem Abstand von der Schaufelvorderkante 39 ist gegenüberliegend auf der Saugseite 47 ein zweiter Schlitz 55 eingebracht. Beide Schlitze 51, 55 durchdringen die Schaufelaußenwand 63. Ein Ende jedes der Schlitze 51, 55, und zwar gegenüberliegende Enden, sind durch einen quer zur Schaufelvorderkante 39 verlaufenden Verbindungsschlitz 57 miteinander verbunden. Der Verbindungsschlitz 57 durchdringt ebenfalls die Schaufelaußenwand 63. Sollte es nun aufgrund eines starken Risswachstums zur Ausbildung eines vom Schlitz 51 zum zweiten Schlitz 55 reichenden durchgehenden Risses 81 kommen, so würde sich lediglich ein vergleichsweise kleines Bruchstück 83 aus dem Bereich der Schaufelvorderkante 39 lösen. Ein solches kleines Bruchstück 83 würde vergleichsweise wenig Schaden an in Strömungsrichtung folgenden Turbinenschaufeln anrichten.

In die Gasturbinenlaufschaufel 34 wird Kühlluft 67 zur Kühlung eingeleitet. Diese Kühlluft 67 tritt aus dem Schlitz 51 aus dem hohlen Inneren der Gasturbinenlaufschaufel 34 aus. Dabei ist der Schlitz 51 so geformt, dass die Kühlluft 67 einen Kühlfilm auf der Oberfläche des Schaufelblattes 35 bildet.

## Patentansprüche

1. Entlang einer Schaufelachse (30) gerichtete und aus einem Grundkörper (32) gebildete Schaufel (31) einer Strömungsmaschine (1), umfassend einen Fußbereich (33), einen Kopfbereich (37) und ein Schaufelblatt (35) mit einer vom Fußbereich (33) zum Kopfbereich (37) reichenden Blatthöhe *h* und mit einer Schaufelvorderkante (39) und einer Schaufelhinterkante (41), die voneinander entlang einer Profilsehne (43) beabstandet sind, wobei etwa parallel zur Schaufelvorderkante (39) und weniger als 50% der Profilsehnenlänge von der Schaufelvorderkante (39) beabstandet ein Schlitz (51) durch den Grundkörper (32) hindurch ausgebildet ist, **dadurch gekennzeichnet, dass** der Schlitz mit einem Füllmaterial (53) gefüllt ist.

2. Schaufel (31) nach Anspruch 1,
bei der der Schlitz (51) weniger als 25% der Profilsehnenlänge von der Schaufelvorderkante (39) beabstandet ist.

3. Schaufel (31) nach Anspruch 1 oder 2,
bei der der Schlitz (51) eine Länge *l* von mindestens 20% der Blatthöhe *h* aufweist.

4. Schaufel (31) nach einem der vorhergehenden Ansprüche, bei der der Schlitz (51) in Richtung der Schaufelachse (30) mittig im Schaufelblatt (35) angeordnet ist.

5. Schaufel (31) nach einem der vorhergehenden Ansprüche, die als Gasturbinenschaufel ausgebildet ist.

6. Schaufel (31) nach Anspruch 5,
ausgebildet als Laufschaufel.

7. Schaufel (31) nach Anspruch 5,
ausgebildet als Leitschaufel.

8. Schaufel (31) nach Anspruch 5,
bei der der Grundkörper (32) aus einer Nickel- oder Kobaltbasis-Superlegierung gebildet ist.

9. Schaufel (31) nach Anspruch 8,
bei der der Grundkörper (32) gerichtet erstarrt oder einkristallin gebildet ist.

10. Schaufel (31) nach einem der vorhergehenden Ansprüche, die hohl ausgebildet ist, wobei der Grundkörper (32) eine Schaufelaußenwand (63) bildet und wobei der Schlitz (51) die Schaufelaußenwand (63) durchdringt.

11. Schaufel (31) nach einem der vorhergehenden Ansprüche, bei der auf dem Grundkörper (32) eine Beschichtung aufgebracht ist, die auch den gefüllten Schlitz (51) überdeckt.

12. Schaufel (31) nach einem der vorhergehenden Ansprüche, bei dem das Füllmaterial (53) ein Lot ist.

13. Schaufel (31) nach einem der vorhergehenden Ansprüche, mit einer Saugseite (47) und einer Druckseite (45), wobei sich der Schlitz (51) auf der Saugseite (47) erstreckt und wobei sich ein entsprechender zweiter Schlitz (55) auf der Druckseite (45) befindet, wobei zwei einander gegenüberliegende Enden der Schlitze (51,55) durch einen etwa senkrecht die Schaufelvorderkante (39) durchschneidenden Verbindungsschlitz miteinander verbunden sind.

14. Verfahren zur Verhinderung einer Rissausbreitung im Schaufelblatt (35) einer Schaufel (31) einer Strömungsmaschine (1), die entlang einer Schaufelachse (30) gerichtet und aus einem Grundkörper (32) gebildet ist, wobei das Schaufelblatt (35) eine Schaufelvorderkante (39) und eine Schaufelhinterkante (41) aufweist, wobei etwa parallel zur Schaufelvorderkante (39) und weniger als 50% der Profilsehnenlänge von der Schaufelvorderkante (39) beabstandet ein Schlitz (51) durch den Grundkörper (32) hindurch ausgebildet wird, **dadurch gekennzeichnet, dass** der Schlitz durch ein Füllmaterial (53) wieder gefüllt wird.

## Claims

1. Blade (31) of a turbomachine (1), aligned along a blade axis (30) and formed from a basic body (32), comprising a root region (33), a tip region (37) and a blade aerofoil (35) with a blade height *h* reaching from the root region (33) to the tip region (37) and with a blade leading edge (39) and a blade trailing edge (41) which are spaced apart along a chord line (43), a slot (51) being formed through the basic body (32) approximately parallel to the blade leading edge (39) and at a distance from the blade leading edge (39) of less than 50% of the chord line length, **characterized in that** the slot is filled with a filling material (53).

2. Blade (31) according to claim 1,
wherein the slot (51) is at a distance from the blade leading edge (39) of less than 25% of the chord line length.

3. Blade (31) according to either of claims 1 or 2,
wherein the slot (51) has a length *l* of at least 20% of the blade height *h*.

4. Blade (31) according to one of the preceding claims,
wherein the slot (51) is located in the direction of the blade axis (30) in the centre in the blade aerofoil (35).

5. Blade (31) according to one of the preceding claims,
which is constructed as a gas turbine blade.

6. Blade (31) according to claim 5,
which is constructed as a rotor blade.

7. Blade (31) according to claim 5,
which is constructed as a stator blade.

8. Blade (31) according to claim 5,
wherein the basic body (32) is formed from a nickel- or cobalt-based superalloy.

9. Blade (31) according to claim 8,
wherein the basic body (32) is formed in a directionally solidified or monocrystalline manner.

10. Blade (31) according to one of the preceding claims,
which is of hollow design, the basic body (32) forming a blade outer wall (63) and the slot (51) penetrating the blade outer wall (63).

11. Blade (31) according to one of the preceding claims,
wherein a coating is applied to the basic body (32), this coating also covering the filled slot (51).

12. Blade (31) according to one of the previous claims,
wherein the filling material (53) is a solder.

13. Blade (31) according to one of the previous claims,
with a suction side (47) and a pressure side (45), the slot (51) extending on the suction side (47) and a corresponding second slot (55) being located on the pressure side (45), two opposite ends of the slots (51,55) being interconnected by a connecting slot intersecting approximately perpendicularly the blade leading edge (39).

14. Method for the prevention of crack propagation in the blade aerofoil (35) of a blade (31) of a turbo-engine, which is aligned along a blade axis (30) and is formed from a basic body (32), the blade aerofoil (35) having a blade leading edge (39) and a blade trailing edge (41), a slot (51) being formed through the basic body (32) approximately parallel to the blade leading edge (39) and at a distance from the blade leading edge (39) of less than 50% of the chord line,
**characterized in that** the slot is again filled by a filling material (53).

## Revendications

1. Aube (31) d'une turbomachine (1), dirigée le long d'un axe (30) d'aube et formée d'un corps (32) de base, comprenant une partie (33) d'emplanture, une partie (37) de tête et une lame (35) d'aube ayant une hauteur h de lame allant de la partie (33) d'emplanture à la partie (37) de tête et ayant un bord (39) avant d'aube et un bord (41) arrière d'aube qui sont à distance l'un de l'autre le long d'une corde (43) de profil, une fente (51) traversant le corps (32) de base, à peu près parallèlement au bord (39) avant de l'aube et à une distance du bord (39) avant de l'aube représentant moins de 50 % de la longueur de la corde du profil, **caractérisé en ce que** la fente est remplie d'une matière (53) de remplissage.

2. Aube (31) suivant la revendication 1,
dans laquelle la fente (51) est à une distance du bord (39) avant de l'aube représentant moins de 25 % de la longueur de la forme du profil.

3. Aube (31) suivant la revendication 1 ou 2,
dans laquelle la fente (51) a une longueur l représentant au moins 20 % de la hauteur h de la lame.

4. Aube (31) suivant l'une des revendications précédentes,
dans laquelle la fente (51) est disposée suivant la direction de l'axe (30) de l'aube au milieu dans la lame (35) d'aube.

5. Aube (31) suivant l'une des revendications précédentes,
**caractérisée en ce qu'**elle est constituée en aube de turbine à gaz.

6. Aube (31) suivant la revendication 5, constituée en aube mobile.

7. Aube (31) suivant la revendication 5, constituée en aube directrice.

8. Aube (31) suivant la revendication 5, dans laquelle le corps (32) de base est en un superalliage à base de nickel ou à base de cobalt.

9. Aube (31) suivant la revendication 8, dans laquelle le corps (32) de base est formé de manière modocristalline ou par solidification dirigée.

10. Aube (31) suivant l'une des revendications précédentes, qui est creuse, le corps (32) de base formant une paroi (63) extérieure de l'aube et la fente (51) traversant la paroi (63) extérieure de l'aube.

11. Aube (31) suivant l'une des revendications précédentes, dans laquelle il est déposé sur le corps (32) de base un revêtement qui recouvre aussi la fente (51) remplie.

12. Aube (31) suivant l'une des revendications précédentes, dans laquelle la matière (53) de remplissage est une brasure.

13. Aube (31) suivant l'une des revendications précédentes, ayant un extrados (47) et un intrados (45), la fente s'étendant sur l'extrados (47) et une deuxième fente (55) correspondante se trouvant sur l'intrados (45) deux extrémités opposées l'une à l'autre des fentes (51, 55) et communiquant entre elles par une fente de liaison coupant à peu près perpendiculairement le bord (39) avant de l'aube.

14. Procédé pour empêcher qu'une fissure ne se propage dans la lame (35) d'une aube (31) d'une turbomachine (1) qui est dirigée le long d'un axe (30) d'aube et qui est formé d'un corps (32) de base, la lame (35) d'aube ayant un bord (39) avant d'aube et un bord (41) arrière d'aube, une fente (51) traversant le corps (32) de base, à peu près parallèlement au bord (39) avant de l'aube et à une distance du bord (39) avant de l'aube représentant moins de 50 % de la longueur de la corde du profil, **caractérisé en ce que** la fente est remplie d'une matière (53) de remplissage.
